# EUROPEAN PATENT APPLICATION

(11) **EP 4 759 106 A1**
(43) Date of publication of application: **17.06.2026**
(21) Application number: 25222080.1
(22) Date of filing: 10.12.2025
(51) Int. Cl.: A01B 63/111, A01C 7/20

(54) **METHODS OF OPERATING AN AGRICULTURAL IMPLEMENT COUPLED TO A THREE-POINT HITCH, AND RELATED SYSTEMS AND CONTROL SYSTEMS**

(30) Priority: 11.12.2024 US 202463730737 P
(71) Applicant: Agco Corporation, Duluth, Georgia 30096 (US)
(72) Inventor: FIGGER, Robert, Hesston (US); BRINKER, Jarrett Lee, Hesston, 67062-0969 (US); FANSHIER, Benjamin Anson, Hesston, 67062-0969 (US); Schmidt, Michael Dennis, Maple Grove (US)
(74) Representative: AGCO Intellectual Property Department

(57) **Abstract**

A method of operating an agricultural implement coupled to a three-point hitch of a towing vehicle comprises lowering the three-point hitch to a lowered position, and determine a position of at least one row unit relative to a toolbar or the ground, and a position of the toolbar relative to the three-point hitch. Based on the position of the at least one row unit and the position of the toolbar, a position of the three-point hitch that would cause the toolbar to move toward a center of a range of travel of the toolbar may be displayed. The method further includes receiving an instruction to adjust the position of the three-point hitch to cause the toolbar to move toward the center of the range of travel of the toolbar. Related agricultural systems and control systems are also disclosed.

## Description

### CROSS-REFERENCE TO RELATED APPLICATION

### FIELD

Embodiments of the present disclosure relate generally to machines and methods for working agricultural fields. More particularly, embodiments relate to systems including agricultural implements coupled to a three-point hitch of a tractor, to methods of controlling such agricultural implements, and to related control systems.

### BACKGROUND

Planting an agricultural field may be performed with a planter including an agricultural implement having planter row units configured to deposit seeds in trenches formed by discs or other mechanisms. The agricultural implement may be towed behind a primary vehicle, such as a tractor. The agricultural implement may include a frame section operably coupled to the tractor with a tow hitch.

Row units are typically spaced along a toolbar of a planter, which may include multiple sections. For example, a 3-section planter has a center section, a left wing section, and a right wing section, each having several ground-engaging row units. A 3-section planter may have a nominal working width from about 30 feet (9.1 m) to about 40 feet (12.2 m), but can be wider or narrower.

When the planter enters a field after transport, the wing sections are extended prior to starting planting operations to move the planter into a planting configuration. When the planter is towed behind a tractor, the planter may be lowered for planting operations at least partially with a lifting hitch coupling the planter to the tractor. When the planter leaves the field after planting operations, the wing sections are generally folded while the lifting hitch lifts the planter prior to road transportation to move the planter into a transport configuration.

### BRIEF SUMMARY

According to an aspect of the disclosure, a method of operating an agricultural implement coupled to a three-point hitch of a towing vehicle comprises lowering the three-point hitch to a lowered position to contact a ground with row units of an agricultural implement coupled to the three-point hitch. The agricultural implement comprises a frame, a toolbar coupled to the frame, the toolbar carrying the row units, each of the row units coupled to the toolbar with parallel linkages, and at least one contouring actuator coupled to the frame and configured cause a plurality of the row units to lift or lower relative to the ground. The method further comprises based on a position of at least one row unit relative to the toolbar or the ground and a position of the toolbar relative to the three-point hitch, displaying a position of the three-point hitch that would cause the toolbar to move toward a center of a range of travel of the toolbar relative to the three-point hitch, and receiving an instruction to adjust the position of the three-point hitch to cause the toolbar to move toward the center of the range of travel of the toolbar while the at least one row unit is at a center of travel of the at least one row unit relative to the toolbar or the ground.

In some embodiments, the method further comprises moving the at least one row unit to the center of travel of the at least one row unit with the at least one contouring actuator before displaying the position of the three-point hitch. Moving the at least one row unit to the center of travel of the at least one row unit least one row unit may comprise moving the parallel linkages of the at least one row unit to be substantially parallel to the ground.

In some aspects, moving the at least one row unit to the center of travel of the at least one row unit least one row unit comprises moving a plurality of the row units to the center of travel of each of the row units. Moving a plurality of the row units to the center of travel of each of the row units may comprise moving each of the row units based on an average distance of the row units relative to the toolbar or the ground. In some embodiments, moving each of the row units based on an average distance of the row units relative to the toolbar or the ground comprises reducing an average distance of the row units from the center of travel of each of the row units.

In some embodiments, moving at least one row unit to a central portion of a range of travel of the at least one row unit with the at least one contouring actuator may include moving the at least one row unit using two contouring actuators.

The method may further comprise measuring the position of the at least one row unit relative to the toolbar or the ground with at least one sensor, and moving the at least one row unit to the center of the range of travel of the at least one row unit based on the position of the at least one row unit.

In some aspects, the method further comprises receiving an instruction to move the three-point hitch to cause toolbar to move to the center of the range of travel of the toolbar relative to the three-point hitch. The method may further include displaying a change in the position of the toolbar relative to the three-point hitch responsive to moving the three-point hitch. In some embodiments, the position of the three-point hitch is locked after moving the three-point hitch.

The method may further include displaying a position of at least one row unit relative to the ground or the toolbar.

In some embodiments, the method further comprises traversing a field with the agricultural implement, adjusting a downforce applied to each of the row units, and responsive to adjusting the downforce applied to each of the row units, adjusting the position of the three-point hitch to cause the toolbar to move toward the center of the range of travel of the toolbar.

Displaying a position of the three-point hitch that would cause the toolbar to move toward a center of a range of travel of the toolbar relative to the three-point hitch may include displaying an indication of the position of the three-point hitch that would cause the toolbar to between about 30% of and about 70% of the range of travel of the toolbar.

In some embodiments, the method further comprises moving the three-point hitch to the position to cause the toolbar to move to the center of the range travel of the toolbar.

The method may further include displaying the position of the toolbar relative to the three-point hitch. Displaying the position of the toolbar relative to the three-point hitch may comprise displaying a percentage of travel of the at least one contouring actuator.

In some aspects, the method further comprises determining the percentage of travel of the at least one contouring actuator with a hydraulic cylinder position sensor.

In some embodiments, lowering the three-point hitch to a lowered position to contact a ground with row units comprises lowering the three-point hitch on a substantially level ground surface.

In some embodiments, an agricultural system comprises a towing vehicle comprising a chassis supported on a ground, and a three-point hitch coupled to the chassis. The agricultural system further comprises an agricultural implement coupled to the three-point hitch, the agricultural implement comprising a frame, a toolbar coupled to the frame, the toolbar carrying row units coupled to the toolbar by parallel linkages, and at least one contouring actuator coupled to the frame and configured to lift or lower a plurality of the row units relative to the ground. The agricultural system further comprises a control system configured to cause the at least one contouring actuator to move the toolbar and at least one row unit to a central portion of a range of travel of the at least one row unit, display a position of the toolbar relative to the three-point hitch, and display a direction of movement of the three-point hitch that would cause the at least one contouring actuator to move the toolbar to a center of a range of travel of the toolbar while the at least row unit is within the central portion of the range of travel of the at least one row unit.

In some embodiments, the agricultural system further comprises a sensor coupled to the at least one contouring actuator configured to determine the position of the toolbar relative to the three-point hitch based on the position of the at least one contouring actuator.

In some aspects, the agricultural system further includes a downforce actuator coupled to each row unit, the downforce actuator configured to apply a downforce to each row unit.

The control system may be configured to move the position of the three-point hitch after applying the downforce to each row unit. In some embodiments, the control system is configured to cause the three-point hitch to move in the direction of movement.

The at least one contouring actuator may comprise two contouring actuators.

The agricultural system may further comprise at least one position sensor configured to determine a position of the at least one row unit relative to the ground or the toolbar.

In some embodiments, the agricultural system further comprises a hydraulic cylinder position sensor or a position sensor configured to determine the position of the toolbar relative to the three-point hitch.

In some embodiments, a control system for an agricultural machine comprises at least one processor, and at least one non-transitory computer-readable storage medium storing instructions thereon that, when executed by the at least one processor, cause the control system to provide a visual indication of a position of a toolbar of an agricultural implement relative to a three-point hitch of a towing vehicle, the agricultural implement coupled to the towing vehicle by the three-point hitch, move at least one row unit coupled to a toolbar of the agricultural implement with at least one contouring actuator coupled to a central portion of a range of travel of the at least one row unit, determine a direction of movement of the three-point hitch that would cause the toolbar to move toward a center of travel of the toolbar while the at least one row unit is within the central portion of the range of travel of the at least one row unit, and display the direction of movement of the three-point hitch.

The instructions, when executed by the at least one processor, may cause the control system to display the direction of movement of the three-point hitch on a visual display of the towing vehicle.

### BRIEF DESCRIPTION OF THE DRAWINGS

While the specification concludes with claims particularly pointing out and distinctly claiming what are regarded as embodiments of the present disclosure, various features and advantages may be more readily ascertained from the following description of example embodiments when read in conjunction with the accompanying drawings, in which:
FIG. 1A is a simplified side view of a system that includes a tractor drawing an agricultural implement in a field along a forward direction;
FIG. 1B is a simplified perspective view of a three-point hitch of the system of FIG. 1A;
FIG. 1C is a simplified top-down view of the system of FIG. 1A;
FIG. 1D is a simplified perspective view of the agricultural implement of FIG. 1A in an extended configuration;
FIG. 1E is a simplified perspective view of the agricultural implement of FIG. 1A in a folded configuration;
FIG. 1F is a simplified view of an interior of an operator cabin of the tractor of FIG. 1A;
FIG. 2 is a simplified side view illustrating a single row unit in the form of a planter row unit that may be carried by the agricultural implement;
FIG. 3 is a simplified flow chart illustrating a method of operating the system of FIG. 1A; and
FIG. 4 is a schematic of a computer-readable storage medium including processor-executable instructions configured to embody one or more of the methods of controlling wing toolbars of the agricultural implement based on the position of the three-point hitch.

### DETAILED DESCRIPTION

The illustrations presented herein are not actual views of any agricultural machine or portion thereof, but are merely idealized representations to describe example embodiments of the present disclosure. Additionally, elements common between figures may retain the same numerical designation.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all elements to form a complete structure or assembly. Only those process acts and structures necessary to understand the embodiments of the disclosure are described in detail below. Additional conventional acts and structures may be used. The drawings accompanying the application are for illustrative purposes only, and are thus not drawn to scale.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the term "may" with respect to a material, structure, feature, or method act indicates that such is contemplated for use in implementation of an embodiment of the disclosure, and such term is used in preference to the more restrictive term "is" so as to avoid any implication that other, compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, the singular forms following "a," "an," and "the" are intended to include the plural forms as well, unless the context clearly indicates otherwise.

As used herein, the term "and/or" includes any and all combinations of one or more of the associated listed items.

As used herein, spatially relative terms, such as "beneath," "below," "lower," "bottom," "above," "upper," "top," "front," "rear," "left," "right," and the like, may be used for ease of description to describe one element's or feature's relationship to another element(s) or feature(s) as illustrated in the figures. Unless otherwise specified, the spatially relative terms are intended to encompass different orientations of the materials in addition to the orientation depicted in the figures.

As used herein, the term "substantially" in reference to a given parameter, property, or condition means and includes to a degree that one of ordinary skill in the art would understand that the given parameter, property, or condition is met with a degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter).

As used throughout, ranges are used as shorthand for describing each and every value that is within the range. Any value within the range can be selected as the terminus of the range.

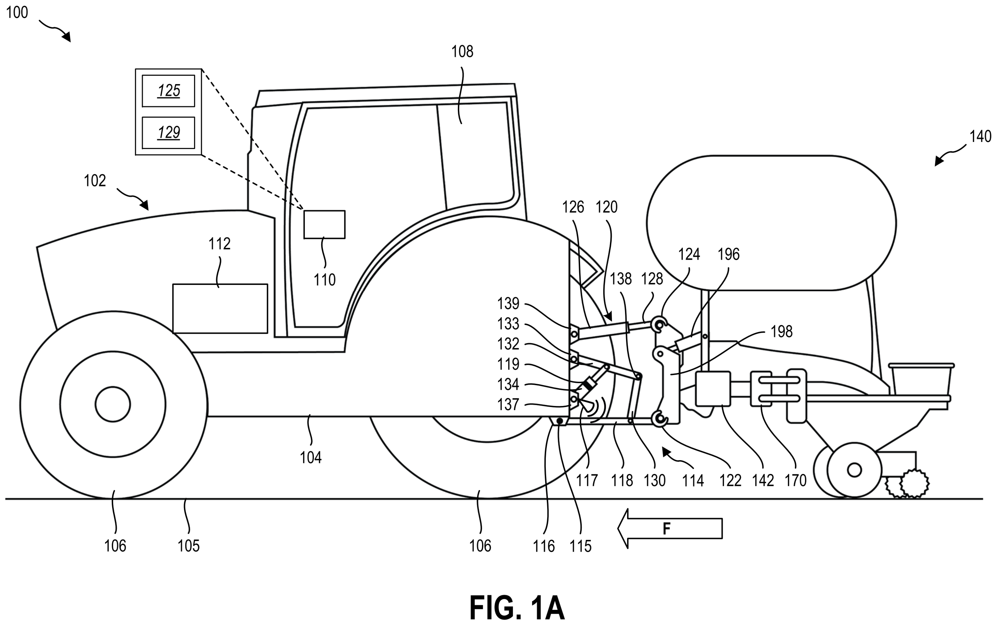

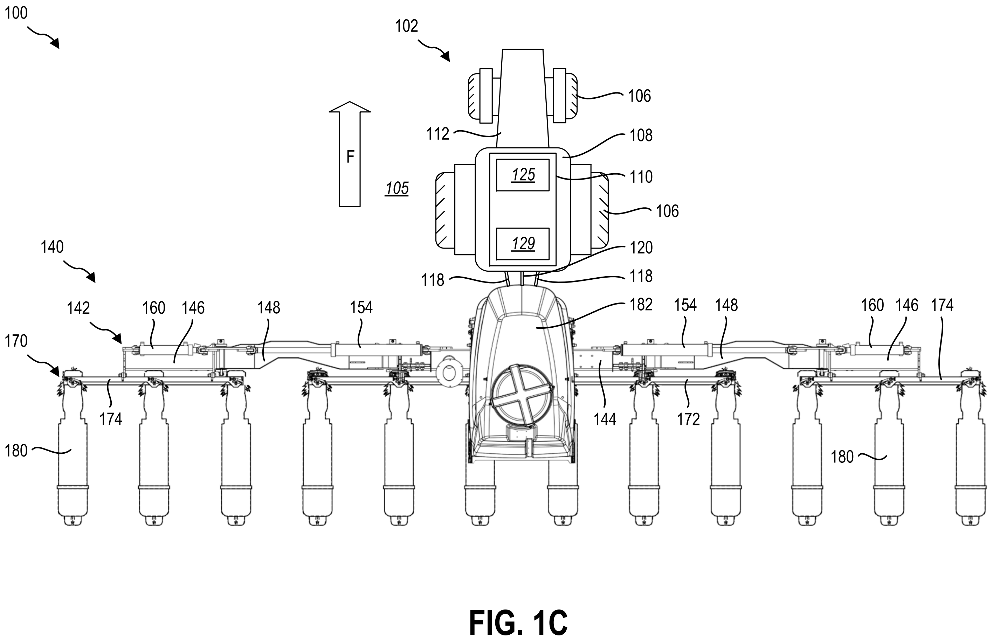

FIG. 1A is a simplified side view of a system 100 (e.g., an agricultural machine) that includes a towing vehicle, such as a tractor 102, drawing an agricultural implement 140 in a field along a forward direction F. The agricultural implement 140 is shown schematically in FIG. 1A, and is shown in more detail in FIG. 1C through FIG. 1E. The tractor 102 includes a chassis 104 supported by wheels 106 and/or tracks on a ground surface 105. An operator cabin 108 is typically supported by the chassis 104 and includes a control system 110 (e.g., a task controller) that may control operation of the tractor 102 and/or the agricultural implement 140. The tractor 102 includes a power source 112 configured to move the wheels 106. The power source 112 may include an internal combustion engine, an electric motor, or another source. The power source 112 may also provide power to a three-point hitch 114 carried by the tractor 102 and coupling the tractor 102 to the agricultural implement 140. For clarity and ease of understanding the description, one of the wheels 106 is omitted in FIG. 1A to more clearly illustrate the three-point hitch 114.

In some embodiments, the three-point hitch 114 is substantially similar to or the same as the rear three-point hitch described in European Patent Application 4,349,146 A1, "Mobile Machine With Three-Point Hitch," published April 10, 2024. In some embodiments, the three-point hitch 114 comprises a three-point hitch.

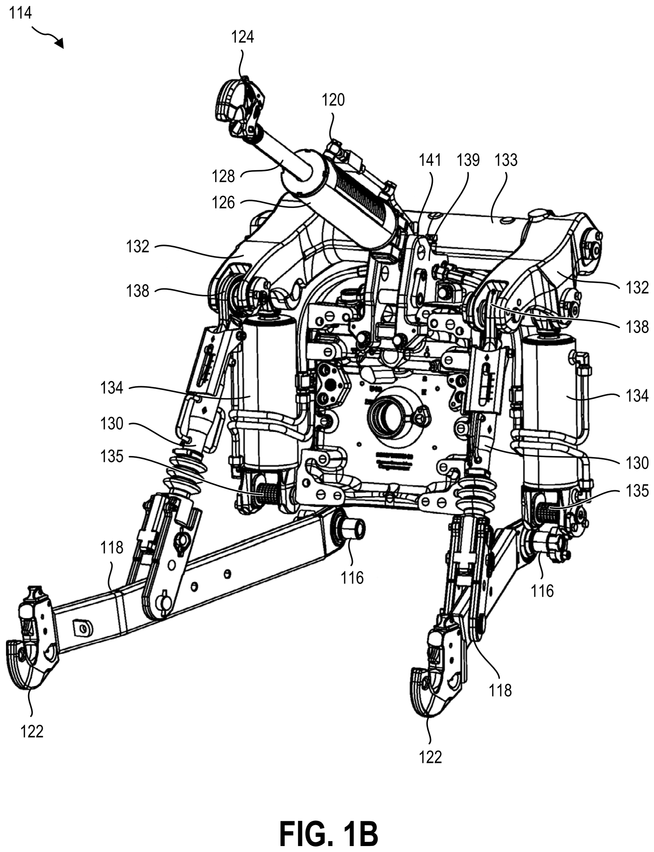

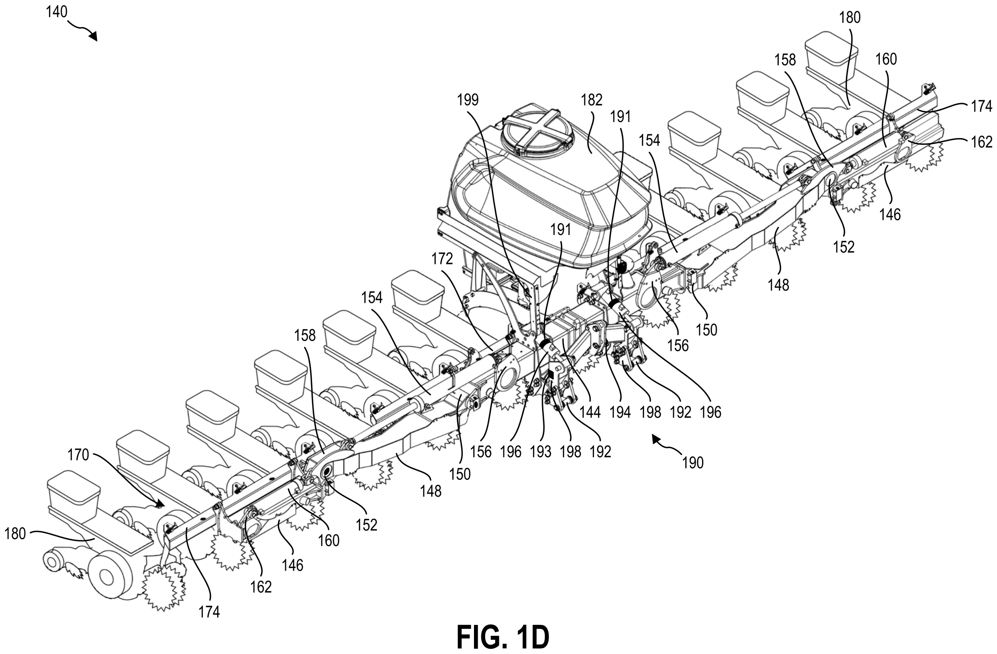

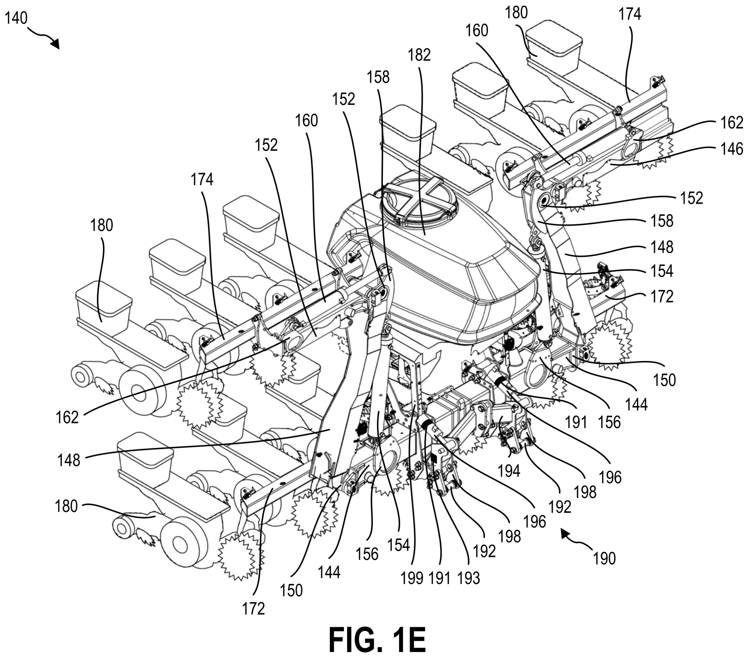

FIG. 1B is a simplified perspective view of the three-point hitch 114 disconnected from the tractor 102 (FIG. 1A) and shows additional details of the three-point hitch 114 than FIG. 1A. With collective reference to FIG. 1A and FIG. 1B, the three-point hitch 114 may be coupled to the chassis 104 at the rear of the tractor 102. The three-point hitch 114 may include a pair of lower links 118, only one of which is illustrated in the view of FIG. 1A, and an upper link 120. Each lower link 118 may include an elongate body having a respective lower coupling hook 122 for coupling the lower link 118 to a receiver 192 (FIG. 1D, FIG. 1E) of a hitch receiver 190 (FIG. 1D, FIG. 1E) of agricultural implement 140. Similarly, the upper link 120 may include a coupling hook 124 for coupling to the upper link 120 to a receiver 194 (FIG. 1D, FIG. 1E) of the hitch receiver 190 (FIG. 1D, FIG. 1E). In some embodiments, the coupling hooks 122, 124 include a pintle hitch.

The lower links 118 may be connected to the chassis 104 at connections 116. In some embodiments, the connections 116 include brackets fixedly coupled to the chassis 104 and a corresponding portion on the lower links 118 to couple the lower links 118 to the chassis 104. The lower links 118 are each rotatably or hingedly connected to the chassis 104 at the connection 116. In some embodiments, the connections 116 include a bar or pin that extends through an opening in the lower link 118 to couple the lower link 118 to a bracket fixedly coupled to the chassis 104. Of course, the connections 116 may include other means for mounting the lower links 118 to the chassis 104.

The upper link 120 may include an elongate body having an adjustable length. In some embodiments, the upper link 120 includes an actuator including a first end 126 fixedly coupled to the chassis 104 and a second end 128 including the coupling hook 124 configured to couple to the hitch receiver 190 of the agricultural implement 140. In some embodiments, the upper link 120 is a hydraulic cylinder. The first end 126 may include, for example, a cylinder; and the second end 128 may include, for example, a rod connected to a piston configured to move up and down in the cylinder during actuation of the upper link 120. In some embodiments, the first end 126 is coupled to the chassis 104 of the tractor 102, such as at a mounting bracket 139 of the tractor 102 and may be fixed with respect to the chassis 104. For example, a pin or rod may extend through openings 141 in the mounting bracket 139 and the upper link 120 to couple the upper link 120 to the chassis 104. The upper link 120 may be configured to pivot about the connection between the upper link 120 (e.g., the first end 126) and the mounting bracket 139. In some embodiments, the upper link 120 may be mountable to the mounting bracket 139 of the tractor 102 at multiple positions to facilitate different hitch geometries.

The lower links 118 are configured to pivot about the connection 116 in a plane perpendicular to, for example, a rear axle of the tractor 102. A mechanism for raising or lowering the coupling hooks 122 of the lower links 118 includes a pair of lift rods 130, only one of which is illustrated in the view of FIG. 1A. Each lower link 118 may be coupled to a lift rod 130 that is, in turn, hingedly coupled to a lift arm 132. The lift arm 132 may be rotatably coupled to a cross member 133 that is fixedly (e.g., rotatably, hingedly) coupled to the chassis 104.

An actuator 134 may be coupled to, and extend between, the chassis 104 and the lift arm 132. Each of the lift arms 132 may be coupled to the chassis 104 via the cross member 133. The cross member 133 facilitates uniform rotation of the lift arms 132 by actuation of actuators 134, which may also be referred to as "lower link actuators." Each actuator 134 may act between one of the lift arms 132 and the chassis 104. In some embodiments, the chassis 104 includes brackets 137 for coupling the actuator to the chassis 104 with connectors 135 (e.g., pins) and is hingedly coupled to the lift arm 132 at or proximate, for example, a hinged connection 138 between the lift rod 130 and the lift arm 132. Accordingly, the three-point hitch 114 includes the upper link 120 comprising an actuator, and two actuators 134 each coupled to a respective lower link 118. The actuators 134 may be configured to cause upward and downward movement of the lower links 118 to facilitate lifting or lowering the three-point hitch 114. The actuators 134 may operate in parallel to move the lower links 118 in parallel.

Each of the upper link 120 and the actuators 134 may individually include a hydraulic cylinder, an electric motor, a pneumatic actuator, or another type of actuator. In some embodiments, the upper link 120 and the actuators 134 each include a hydraulic cylinder. In some embodiments, the upper link 120 and the actuators 134 include a double acting fluid cylinder including, for example, a piston movably mounted in a cylinder. In some embodiments, each of the upper link 120 and the actuators 134 are in fluid communication with a hydraulic system of the tractor 102, which may be powered by the power source 112. In some embodiments, the upper link 120 and the actuators 134 are directly powered by the power source 112. In some embodiments, the upper link 120 and/or the actuators 134 comprise pneumatic actuators. In some embodiments, the actuators 134 are configured to lift and/or lower the lower links 118 simultaneously. For example, the actuators 134 may be couped to a same actuator control valve and/or may be synchronized or phased together. Since the actuators 134 are configured to lift and/or lower the lower links 118, the three-point hitch 114, the actuators 134 may also be referred to herein as "three-point hitch actuators" or "lower link actuators."

The three-point hitch 114 may have a travel from a fully lifted (raised) position wherein the agricultural implement 140 coupled to the three-point hitch 114 is fully lifted (e.g., such that row units 180 of the agricultural implement are lifted from and do not contact the ground surface 105) and a fully lowered position wherein the agricultural implement 140 coupled to the three-point hitch 114 is fully lowered (e.g., the row units 180 contact the ground). The position of the three-point hitch 114 may be fully lowered, fully lifted, or at any position between the fully powered position and the fully lowered position. Since the agricultural implement 140 is coupled to the tractor 102 at the three-point hitch 114, the position of the three-point hitch 114 may affect the height of the agricultural implement 140 above the ground surface 105 and relative to the tractor 102. During planting operations, the three-point hitch 114 may be in a lowered position (e.g., may not be fully lifted), and during transport, the three-point hitch 114 may be lifted (e.g., not fully lowered).

In some embodiments, actuation of the actuators 134 to an extended position may cause the lower links 118 to rotate about the connection 116 (e.g., in the counterclockwise direction in the view of FIG. 1A) to lift the lower links 118 and the agricultural implement 140 coupled to the three-point hitch 114 relative to the ground surface 105. In some embodiments, the level of actuation (e.g., the percentage of travel of the piston of the actuators 134 from a fully retracted position to a fully extended position) may correspond to the percentage of travel of the three-point hitch 114. For example, when the three-point hitch 114 is in a fully lowered position, the actuators 134 may be fully retracted; when the three-point hitch 114 is in a fully lifted position, the actuators 134 may be fully extended; when the three-point hitch 114 is 20% lifted, the actuators 134 may be 20% extended; when the three-point hitch 114 is 40% lifted, the actuators 134 may be 40% extended; and so forth. In other words, the percentage of travel of the three-point hitch 114 (and the percentage (e.g., amount) that the three-point hitch 114 is lifted or lowered) may correspond (e.g., directly correspond) to the level of actuation and the percentage of travel of the actuators 134. As used herein, a percent actuation means and includes a percent that a piston is extended from a cylinder. For example, a 0% actuation means and includes a fully retracted position of a piston within a cylinder; and a 100% actuation means and includes a fully extended position of a piston within a cylinder.

In some embodiments, the three-point hitch 114 includes one or more sensors 115, 117, 119 configured to measure a position of the three-point hitch 114, such as a percent of travel of the three-point hitch 114 (e.g., the percent that the three-point hitch 114 is lifted). In some embodiments, the three-point hitch 114 includes a sensor 119 configured to measure a level of actuation of at least one of the actuators 134. For example, the sensor 119 may include a hydraulic cylinder position sensor. The sensor 119 may include a magnetostrictive sensor, a potentiometric sensor, a linear variable inductance transducer, or another type of sensor configured to determine a position of the piston within the cylinder of the actuator 134. In some embodiments, the percentage of travel and the position of the actuators 134 measured by the sensor 119 may correspond directly to the percentage of travel and the position of the three-point hitch 114. Each of the actuators 134 may include a sensor 119, or only one actuator 134 may include a sensor 119.

The sensor 115 may be configured to measure the angular rotation of one of the lower links 118, which data may be used to determine the position of the three-point hitch 114. In some embodiments, the sensor 115 is coupled to the lower link 118 at the pivot point of the lower link 118 about the chassis 104 (e.g., about the connection 116). The sensor 115 may be a rotary sensor (e.g., a rotary position sensor) configured to measure an angle of the lower link 118 relative to the chassis 104, the upper link 120, the ground surface 105, or to another component of the tractor 102. In some embodiments, the sensor 115 is coupled to the lift arm 132 at the connection between the lift arm 132 and the chassis 104, such as at the pivot point of the lift arm 132 about the chassis 104. In some embodiments, the rotation of the lower link 118 measured by the sensor 115 may correspond to the position of the lower links 118 and/or the angle between the lower link 118 and at least one of the chassis 104 and the ground surface 105, which may correspond to the position of the three-point hitch 114.

The sensor 117 may be coupled to one of the tractor 102 (e.g., the chassis 104) and the three-point hitch 114 and configured to determine a distance between the sensor 117 and at least one of the lower links 118. In some embodiments, the sensor 117 is coupled to at least one of the actuators 134 and configured to measure a distance between the actuator 134 and at least one of the lower links 118. In some embodiments, the sensor 117 is coupled to a portion of the actuator 134 that is fixed with respect to the chassis 104. In other embodiments, the sensor 117 is coupled to the tractor 102, such as at the chassis 104. The sensor 117 may include a non-contact depth sensor, for example, an optical sensor, an ultrasonic transducer, an RF (radio frequency) sensor, lidar, radar, etc. Such sensors are described in, for example, U.S. Patent 10,874,042, "Seed Trench Depth Detection Systems," granted December 29, 2020. In some embodiments, the distance between the sensor 117 and the lower links 118 may correspond to the position of the lower links 118, which may correspond to the position of the three-point hitch 114 (e.g., a percent lifted of the three-point hitch 114).

The sensors 115, 117, 119 may provide sensor data corresponding to the position of the three-point hitch 114 (e.g., whether the three-point hitch 114 is fully lifted, fully lowered, or at an intermediate position). In some embodiments, the sensor data may be used to determine the position of the three-point hitch 114.

FIG. 1C is a simplified top-down view of the system 100 illustrating different components of the agricultural implement 140. The agricultural implement 140 includes a frame 142 carrying a toolbar 170 and row units 180 coupled to the toolbar 170. Each of the row units 180 may be in operable communication with a central hopper 182 containing seed to be planted and/or fertilizer to be applied. That is, the row units 180 may be planter and/or fertilizer row units.

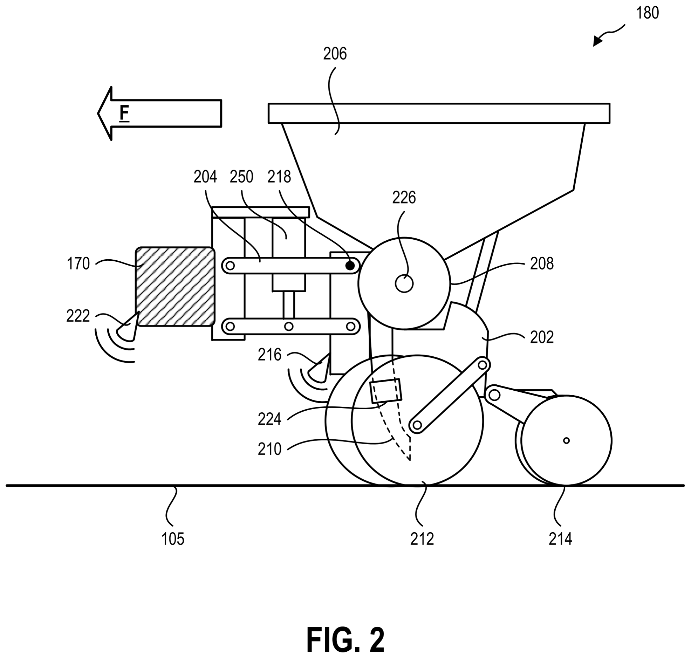

The row units 180 may be any type of ground-engaging device for planting, seeding, fertilizing, tilling, or otherwise working crops or soil, typically in rows. For example, the row units may be similar to the row units described in U.S. Patent Application 2024/0188472 A1, "Agricultural Implements Having Row Unit Position Sensors and at Least One Adjustable Wheel, and Related Control Systems and Methods," published June 13, 2024. As an example, FIG. 2 is a simplified side view illustrating a single row unit 180 in the form of a planter row unit over the ground surface 105. Each row unit 180 has a body 202 connected to the toolbar 170 (e.g., a center toolbar 172 or a wing toolbar 174) by a parallel linkage 204, enabling the row unit 180 to move vertically independent of the toolbar 170. In some embodiments, the body 202 of the row unit 180 may be connected to the toolbar 170 by another structure, such as a rotating arm. The body 202 may be a unitary member, or may include one or more members coupled together (e.g., by bolts, welds, etc.). The body 202 operably supports one or more of a hopper 206, a seed meter 208, a product delivery mechanism 210 (e.g., a seed delivery mechanism), a trench opening assembly 212, a trench closing assembly 214, and/or any other components as known in the art. The row unit 180 shown in FIG. 2 may optionally be a part of a central fill planter, in which case the hopper 206 may be one or more mini-hoppers fed by the central hopper 182 (FIG. 1A through FIG. 1E) carried by the agricultural implement 140. In other embodiments, the central hopper 182 may be omitted, and each row unit 180 may simply use its own hopper 206 alone. The row unit 180 may further include a product sensor 224 and a variable rate drive 226 configured to control delivery of product (e.g., seeds, fertilizer) from the hopper 206 to the field through the product delivery mechanism 210.

At least some of the row units 180 may include at least one sensor 216 configured to determine a position of the row unit 180 relative to the ground surface 105 or the toolbar 170. A sensor 218 may be coupled to the parallel linkage 204 and configured to determine the position of the row unit 180 based on the angular rotation of the parallel linkage 204 determined by the sensor 218. As shown in FIG. 2, the sensors 216, 218 may be carried on the body 202 of the row unit 180 itself. In other embodiments, the sensors 216, 218 may be carried by the toolbar 170, the frame 142 of the agricultural implement 140, the tractor 102, or even by another vehicle (e.g., another ground vehicle, an unmanned aerial vehicle, etc.). The sensor 218 may be a rotary sensor configured to measure an angle of an element of the parallel linkage 204 relative to the body 202 of the row unit 180 or to the toolbar 170, and may be connected to a pivot point of the body 202 of the row unit 180 or to the toolbar 170. The sensor 216 may include a non-contact depth sensor, for example, an optical sensor, an ultrasonic transducer, an RF (radio frequency) sensor, lidar, radar, etc. Such sensors are described in, for example, U.S. Patent 10,874,042. The sensors 216, 218 may provide information that can be used to adjust the position of the toolbar 170. In some embodiments, an additional sensor 222 may be configured to detect the position of the toolbar 170 relative to the ground surface 105.

Each of the row units 180 may have a range of travel corresponding to a range of travel (rotational travel) of the parallel linkages 204. The range of travel of the row units 180 may range from a fully lifted (raised) row unit position to a fully lowered row unit position. The distance between the row unit 180 and the ground surface 105 (e.g., measured by the sensor 216) may be lower when the row unit 180 is in the fully lowered position than when the row unit 180 is in the fully lifted position. The sensor data measured by the sensor 216 may correspond to the percentage of travel of the row unit 180. In addition, the sensor data measured by the sensor 218 may correspond to an angle of an element of the parallel linkage 204 relative to the body 202 or to the toolbar 170 and correspond to the percentage of travel of the row unit 180. In other words, the percentage of travel of the row unit 180 may be determined based on the angle of the parallel linkage 204 relative to the body 202 and/or toolbar 170 measured by the sensor 218. Accordingly, the sensor data from the sensors 216, 218 may be used to determine the percentage of travel of the row units 180.

In some embodiments, the row units 180 include a downforce actuator 250 configured to apply a downforce to the row unit 180. For clarity, the downforce actuator 250 is not shown in the view of FIG. 1A. The downforce actuator 250 may be coupled to the parallel linkages 204. In some embodiments, the downforce actuator 250 is directly coupled to one of the parallel linkages 204 and to the toolbar 170. In some embodiments, the downforce actuator 250 is coupled to a crossbar or member that is coupled to a pair opposing bars of the parallel linkages 204. For example, the crossbar may extend in and out of the page in the view of FIG. 2. The downforce actuator 250 may be configured to apply a downforce to the row unit 180 based on a load measured by a load cell of the row unit 180 and may be configured to facilitate uniform seed depth and soil compaction by the row units 180.

While the row units 180 have been described as being configured to provide seeds to the field, the disclosure is not so limited. In some embodiments, the row units 180 are configured to provide solid fertilizer to the field. In addition, while the row units 180 have been described and illustrated as including a particular type of row unit, the disclosure is not so limited. In some embodiments, the row units 180 are configured to provide a liquid (e.g., liquid fertilizer) to the field through a liquid outlet line.

FIG. 1D is a simplified perspective view of the agricultural implement 140 disconnected from the tractor 102 and in an extended configuration (a planting configuration) in which planting operations are performed. FIG. 1E is a simplified perspective view of the agricultural implement 140 when in a folded configuration (a transport configuration), such as during transport and/or when in a headlands. FIG. 1D and FIG. 1E show a hitch receiver 190 for coupling the agricultural implement 140 to the three-point hitch 114 of the tractor 102. The hitch receiver 190 may be coupled (attached) to the center frame section 144. With collective reference to FIG. 1C through FIG. 1E, the frame 142 may include a center frame section 144, and wing frame sections 146 coupled to the center frame section 144 by an intermediate frame section 148. The intermediate frame section 148 may be coupled to the center frame section 144 at a first hinged joint 150 and to the wing frame section 146 at a second hinged joint 152.

The toolbar 170 may include a center toolbar 172 operably coupled to the center frame section 144, and wing toolbars 174 operably coupled to the wing frame sections 146. In some embodiments, the toolbar 170 is not operably coupled to the intermediate frame section 148 and there are no row units 180 operably coupled to the intermediate frame section 148 (e.g., by means of a toolbar). In some embodiments, the wing toolbars 174 are separated from (e.g., not directly connected to) the center toolbar 172.

The intermediate frame section 148 may be configured to rotate relative to the center frame section 144 about the first hinged joint 150, and the wing frame section 146 may be configured to rotate relative to the intermediate frame section 148 about the second hinged joint 152. The first hinged joint 150 and the second hinged joint 152 may each comprise a pin joint (e.g., a roller bearing) or a hinge joint.

Each wing frame section 146 and operably coupled wing toolbar 174 may be configured to be lifted (e.g., rotated) relative to the center frame section 144 to fold the wing frame sections 146 and the wing toolbars 174, as shown in FIG. 1E. In some embodiments, each intermediate frame section 148 is coupled to a first actuator 154 that extends between and connects the intermediate frame section 148 to the center frame section 144. The first actuator 154 is coupled to the center frame section 144 at a first connector 156 and to the wing frame section 146 at a second connector 158. Actuation (operation) of the first actuator 154 may cause the intermediate frame section 148, the coupled wing frame section 146, and the wing toolbar 174 coupled to the wing frame section 146 to rotate about the center frame section 144, such as about the first connector 156. Thus, operation of the first actuators 154 may cause the wing toolbars 174 to lift and/or lower relative to the center toolbar 172. Since actuation (e.g., operation) of the first actuators 154 causes the wing toolbars 174 to lift or lower relative to the center toolbar 172, the first actuators 154 may also be referred to herein as "wing toolbar lifting actuators" or "wing toolbar actuators."

The agricultural implement 140 may further include second actuators 160 configured to tilt the wing frame sections 146 and the wing toolbars 174 relative to the center frame section 144 and the center toolbar 172. As used herein, "tilting" of the wing frame section 146 and the wing toolbar 174 means adjusting a relative angle between the wing frame section 146 and the intermediate frame section 148 (and the angle between the wing toolbar 174 and the center toolbar 172), which also adjusts a corresponding orientation of row units 180 operably coupled to the center toolbar 172 relative to an orientation of row units 180 operably coupled to a wing toolbar 174. Each second actuator 160 may be coupled to the wing frame section 146 at a third connector 162 and to the intermediate frame section 148 at the second connector 158. In some embodiments, the second actuator 160 may be configured to cause an angle between a longitudinal axis of the center frame section 144 and a longitudinal axis of the wing frame section 146 to change. The second actuators 160 may also be referred to herein as "tilt actuators" or "wing toolbar tilt actuators."

With reference to FIG. 1D and FIG. 1E, the hitch receiver 190 is configured to receive the three-point hitch 114 of the tractor 102. For example, the hitch receiver 190 may be configured to receive (e.g., couple to) the coupling hooks 122, 124 (FIG. 1A). The hitch receiver 190 may include a pair of receivers 192 (lower link receivers) configured to operably couple to the respective coupling hooks 122 of the lower links 118; and a receiver 194 (upper link receiver) between the pair of receivers 192 and configured to operably couple to the coupling hook 124 of the upper link 120. The receivers 192, 194 may include a ring (e.g., a lunette ring (e.g., also referred to as a "lunette," a "lunette eye," or a "coupler"), a bar, or another means for connecting the receivers 192, 194 to the corresponding coupling hooks 122, 124.

The hitch receiver 190 may include one or more actuators 196 configured to facilitate movement of the agricultural implement 140 with respect to the three-point hitch 114 and/or the tractor 102. For example, the actuators 196 may be configured to cause the toolbar 170 to move relative to the three-point hitch 114 and/or the hitch receiver 190. In some embodiments, the actuators 196 are configured to lift and/or lower the toolbar 170 relative to the tractor 102 and/or the ground surface 105. When the row units 180 are in contact with the ground surface 105, extension of the actuators 196 causes the row units 180 to move downwards and/or may cause the parallel linkages 204 of the row units 180 to rotate such that the row units 180 move upwards relative to the toolbar 170 (and the parallel linkages 204 move counterclockwise in the view of FIG. 2). Similarly, when the row units 180 are in contact with the ground surface 105, retraction of the actuators 196 causes the row units 180 to move downwards and/or may cause the parallel linkages 204 of the row units 180 to rotate such that the row units 180 move downwards relative to the toolbar 170 (and the parallel linkages 204 rotate clockwise in the view of FIG. 2). Accordingly, when the row units 180 are in contact with the ground surface 105, the actuators 196 may be configured to move the toolbar 170 relative to the three-point hitch 114 such that the force of the ground surface 105 on the row units 180 moves the row units 180 relative to the ground surface 105 and/or the toolbar 170. In some embodiments, extension of the actuators 196 may cause the agricultural implement 140 to pitch the agricultural implement 140 in the aft direction to lower the row units 180 and retraction of the actuators 196 may cause the agricultural implement 140 to pitch the agricultural implement 140 in the forward direction and lift the row units 180.

In some embodiments, the actuators 196 are coupled to the hitch receiver 190, such as at brackets 198 including the receivers 192. An end of the actuators 196 may be coupled to another portion of the agricultural implement 140, such as at brackets 199 coupled to the frame 142 and/or the central hopper 182. The actuators 196 may be configured to facilitate contouring of the agricultural implement 140 based on the contour (e.g., slope, grade) of the ground surface 105. In some embodiments, the actuators 196 are configured to cause the row units 180 to move relative to the ground surface 105 and/or the toolbar 170. In some embodiments, extension of the actuators 196 causes the force on the row units 180 from the ground surface 105 to move the row units 180 upwards relative to the toolbar 170; and retraction of the actuators 196 causes the force on the row units 180 from the ground surface 105 to move the row units 180 downwards relative to the toolbar 180. The actuators 196 may be used to facilitate contouring of the row units 180 to the contour of the ground surface 105. Since the actuators 196 are configured to cause the row units 180 to contour to the grade of the ground surface 105, the actuators 196 may be referred to herein as "contouring actuators" or "toolbar contouring actuators."

The actuators 196 may have a range of travel spanning from a fully extended (fully actuated) to a fully retracted position. In some embodiments, the percentage of travel of the actuators 196 may correspond to the amount that the row units 180 are raised or lowered relative to the ground surface 105.

Each of the first actuators 154, the second actuators 160, and the actuators 196 may individually include a hydraulic cylinder, an electric motor, a pneumatic actuator, or another type of actuator. In some embodiments, the first actuators 154, the second actuators 160, and the actuators 196 comprise a hydraulic cylinder.

In some embodiments, at least one sensor 191 is configured to determine a position of the toolbar 170 relative to at least one of the three-point hitch 114, the hitch receiver 190, and/or the tractor 102. The sensor 191 may be configured to determine the position or percentage of travel of at least one actuator 196, which may correspond to the position of the toolbar 170 relative to the three-point hitch 114. For example, the position of the toolbar 170 relative to the three-point hitch 114 may correspond to the actuation of the actuators 196 (since the actuators 196 may move the toolbar 170 relative to the three-point hitch 114). In some embodiments, at least one sensor 191 comprises a hydraulic cylinder position sensor configured to measure the position of, for example, a piston of the actuator 196 within the cylinder of the actuator 196. In some embodiments, at least one sensor 193 comprises a position sensor coupled to, for example, one of the tractor 102 and the agricultural implement 140 for measuring a distance between the tractor 102 and the agricultural implement 140. For example, the sensor 193 may include a position sensor coupled to the bracket 198 and configured to measure a distance between the bracket 198 and the tractor 102.

With reference again to FIG. 1A and FIG. 1C, the control system 110 may include a central processing unit ("CPU"), memory, implement controller, and one or more input/output (I/O) devices (e.g., a graphical user interface ("GUI") (e.g., a touch-screen interface)), may be located in the operator cabin 108. The control system 110 may include a three-point hitch controller 125 and an agricultural implement toolbar controller 129. The three-point hitch controller 125 and the agricultural implement toolbar controller 129 may be configured to communicate with one another and with the agricultural implement 140, such as via wired or wireless communication. Various control components (e.g., the three-point hitch 114 (e.g., the sensors 115, 117, 119, the actuators 134, the upper link 120), the actuators 196, the first actuators 154, and the second actuators 160 may communicate with the control system 110 and control various aspects of the agricultural implement 140.

In some embodiments, the three-point hitch controller 125 is configured to control a position of the three-point hitch 114, such as based on one or more inputs from an operator of the tractor 102 received at the control system 110 (e.g., responsive to receiving an input from an I/O device to lift and/or lower the three-point hitch 114). The three-point hitch controller 125 may be in operable communication with the three-point hitch 114. For example, the three-point hitch controller 125 may be in operable communication with each of the sensors 115, 117, 119 and the actuators 134. As described herein, the three-point hitch controller 125 may be configured to determine the position of the three-point hitch 114 based on sensor data from at least one of the sensors 115, 117, 119; and may be configured to control the position of the three-point hitch 114 with the actuators 134.

The agricultural implement toolbar controller 129 may be configured to control a position of the entire frame 142 and/or the toolbar 170 of the agricultural implement 140 relative to the three-point hitch 114 (and/or the hitch receiver 190 and/or the tractor 102). For example, the agricultural implement toolbar controller 129 may be configured to cause the actuators 196 to move the toolbar 170 relative to the three-point hitch 114 to lift and/or lower the row units 180 relative to the toolbar 170 and/or the ground surface 105. The agricultural implement toolbar controller 129 may be in operable communication with each of the actuators 196. In some embodiments, the agricultural implement toolbar controller 129 is configured to control operation of the actuators 196 based on sensor data from at least one sensor 216, 218 and/or the contour of the ground surface 105. In some embodiments, the agricultural implement toolbar controller 129 is configured to reduce (e.g., minimize) the number of row units 180 that are outside of a center (e.g., a central portion) of the range of travel of the row units 180. In other words, the agricultural implement toolbar controller 129 is configured to maintain the row units 180 within the center of travel of the row units 180. In addition, the agricultural implement toolbar controller 129 is configured to move the row units 180 up or down relative to the ground surface 105 and/or up or down relative to the toolbar 170.

Based on the sensor data from the sensors 216, 218 of the row units 180, the agricultural implement toolbar controller 129 causes the actuators 196 to move the toolbar 170 relative to three-point hitch 114 to move the row units 180 to a center of travel of the row units 180. The agricultural implement toolbar controller 129 may determine an amount to actuate the actuators 196 (to move the toolbar 170) based on sensor data from sensors 216, 218 of multiple row units 180. In some embodiments, the actuators 196 move the toolbar 170, causing the parallel linkages 204 of at least one row unit 180 to be parallel to the ground surface 105 and/or the at least one row unit 180 to be at the center of travel thereof. In some embodiments, the agricultural implement toolbar controller 129 is configured to cause the actuators 196 to move the toolbar 170 and the row units 180 to reduce the average distance of the row units 180 from a center of travel of the row units 180.

In some embodiments, when the agricultural implement 140 is on a substantially level ground surface 105, it is desired for the toolbar 170 to be positioned at a center of travel of the toolbar 170 relative to the three-point hitch 114 (and the actuators 196 to be at their center of travel) to optimize the amount that the toolbar 170 may be moved to cause the row units 180 to move relative to the toolbar 170 depending on the contour of the ground surface 105. For example, the actuators 196 may be moved to be at about 50% of travel when the agricultural implement 140 is on substantially level ground. Further, it may be desired to position the row units 180 (e.g., a majority of the row units 180, a plurality of the row units 180) to be within the center of travel of the row units 180 (e.g., a central range of the range of travel of the row units 180, such as between about 30% and about 70% of the range of travel of the row units 180) when the agricultural implement 140 is in a planting position.

In some embodiments, the position of the actuators 196 and the position of the row units 180 may depend, at least partially, on the position of the three-point hitch 114. For example, higher positions of the three-point hitch 114 may correspond to a relatively higher position of the row units 180. If the three-point hitch 114 is too high, the actuators 196 may be fully extended and if the three-point hitch 114 is too low, the actuators 196 may be fully retracted. Accordingly, the position of the three-point hitch 114 may be set to a position such that the toolbar 170 (and the actuators 196) and the row units 180 are at their respective center of travel for planting operations such that the toolbar 170 may be moved relative to the three-point hitch to move the row units 180 with the contour of the ground surface 105. The control system 110 (e.g., the agricultural implement toolbar controller 129) may be configured to cause the actuators 196 to move the toolbar 170 to keep the row units 180 at a desired position relative to the ground surface 105.

In some embodiments, responsive to lowering the three-point hitch 114 to a planting position, the control system 110 (e.g., the agricultural implement toolbar controller 129) may be configured to cause the actuators 196 to move the toolbar 170 such that the force of ground surface 105 on the at least one row unit 180 moves the at least one row unit toward a center of travel thereof. In some embodiments, a plurality of the row units 180 are moved to the center of the range of travel of the row units 180. After moving the actuators 196 to move the toolbar 170 relative to the three-point hitch 114 and to move the row units 180, the position of the three-point hitch 114 may be adjusted to move the toolbar 170 to the center of travel of the toolbar 170 relative to the three-point hitch 114 while the row units 180 are within the center of travel of the range of travel of the row units 180. Adjusting the position of the three-point hitch 114 to cause the toolbar 170 to be at the center of travel of the toolbar 170 relative to the three-point hitch 114 while the row units 180 are at their center of travel may optimize the amount (e.g., range) of contouring that may be performed by the actuators 196 during planting operations. Moving the toolbar 170 to the center of travel of the toolbar 170 relative to the three-point hitch 114 may include actuating the actuators 196 (e.g., moving the actuators 196 to their center of travel).

In some embodiments, after moving the toolbar 170 to the center of travel of the toolbar 170 relative to the three-point hitch 114 by moving the three-point hitch 114, planting operations may be performed. During planting operations, the height of the tractor 102 and the agricultural implement 140 may change as downforce is applied to the row units 180 (e.g., via the downforce actuators 250), as the weight of the agricultural implement 140 changes (e.g., due to the commodities carried by the central hopper 182 and/or the hoppers 206), due to changes in tire pressures, and/or due to other factors. Due to the changing height of the agricultural implement 140, the toolbar 170 and/or the actuators 196 may move to outside a central portion of the range of travel of thereof to maintain the row units 180 within the center of travel of the row units 180. In some embodiments, the control system 110 is configured to cause the position of the three-point hitch 114 to move to cause the toolbar 170 to move toward the center of travel of the toolbar 170 relative to the three-point hitch 114 and/or cause the actuators 196 to move toward a center of travel of the actuators 196 while the row units 180 are within the center of the range of travel of the row units 180.

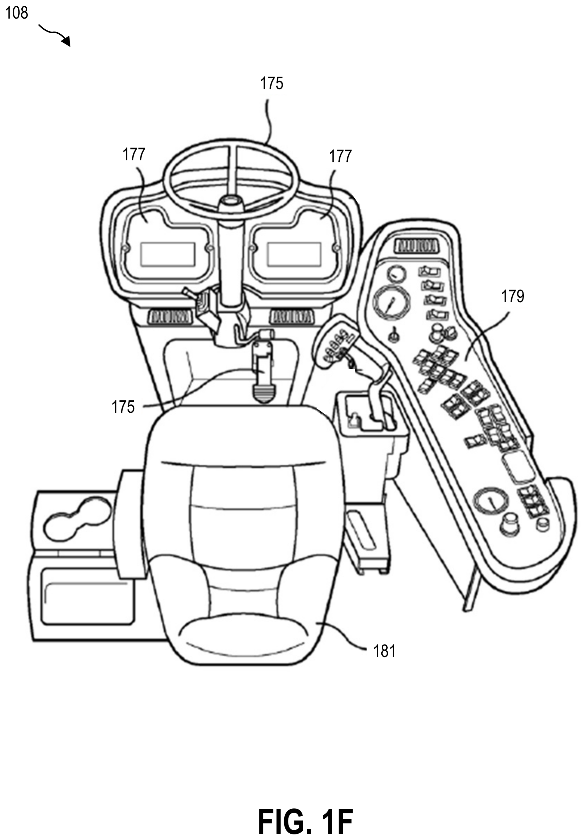

FIG. 1F is a simplified view of an interior of the operator cabin 108. The operator cabin 108 may include a control environment which may include a steering wheel 175, one or more electronic display panels 177, and a control panel 179 including buttons, switches, levers, gauges, and/or other user interface elements. The various components of the control environment enable the operator to control the functions of the tractor 102 and the agricultural implement 140, including controlling the three-point hitch 114 and the position of the agricultural implement 140. The various user interface elements are positioned around and proximate a seat 181 for easy access by an operator during operation of the system 100. In some embodiments, the control environment may include a touchscreen display. For example, one or both of the electronic display panels 177 may be or include a touchscreen, or a display terminal with a touchscreen may be mounted on or near the control panel 179.One or more elements of the control environment may be operably coupled to the control system 110. In some embodiments, at least one of the electronic display panels 177 is configured to display a position of the three-point hitch 114 and a position of the actuators 196. The position of the actuators 196 may be displayed as, for example, a percentage of travel of the actuators 196 and/or a relative height of the toolbar 170 and the row units 180 based on the position of the actuators 196. In some embodiments, at least one of the electronic display panels 177 is configured to display a position of the three-point hitch 114 that would cause the actuators 196 to be in their middle of travel or within a central portion of the range of travel of the actuators 196 while the row units 180 are within their central portion of the range of travel of the row units 180.

Although the agricultural implement 140 has been described and illustrated as including a particular type of agricultural implement 140, the disclosure is not so limited. In other embodiments, the agricultural implement 140 may include, for example, a different kind of towed planter. By way of non-limiting example, the agricultural implement 140 may include a towed agricultural implement that could be coupled to a tractor via a three-point hitch. Mounting such agricultural implements to the three-point hitch 114 may facilitate maintaining the tongue of the agricultural implement level and optimization of the performance of the agricultural implement (e.g., by moving the toolbar of such an implement to a center of travel of the toolbar while the row units are in contact with the ground, as described above with reference to the agricultural implement 140).

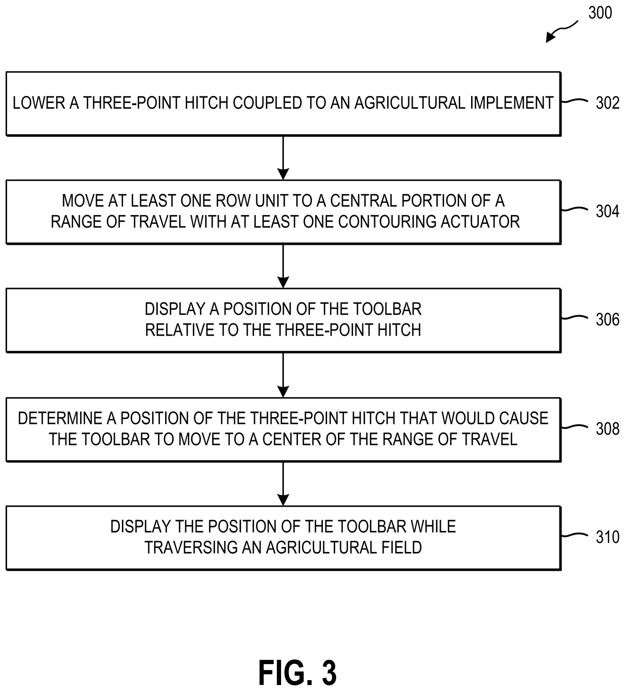

FIG. 3 is a simplified flow chart illustrating a method 300 of operating the system 100. The method 300 includes lowering a three-point hitch coupled to an agricultural implement until row units of the agricultural implement contact a ground surface, as shown in act 302. The three-point hitch and the agricultural implement may be the same as the three-point hitch 114 and the agricultural implement 140 described above. The three-point hitch may be lowered with actuators, such as with the actuators 134 and/or the upper link 120.

Responsive to lowering the three-point hitch, the method 300 further includes moving at least one row unit coupled to a toolbar of the agricultural implement to a central portion of a range of travel of the at least one row unit with at least one contouring actuator, as shown in 304. Moving the at least one row unit to the central portion of the range of travel of the at least one row unit may include moving the at least one row unit to the center of travel of the at least one row unit and/or moving the at least one row unit be between about 30% and about 70% of the range of travel of the at least one row unit. The contouring actuator may include the actuators 196 described above. In some embodiments, the contouring actuator includes a plurality of contouring actuators configured to lift or lower a plurality of the row units based on the measured position of the row units (e.g., based on sensor data from sensors 216, 218) to reduce the average distance of the row units from a center of travel of the row units, as described above.

The method 300 may further include displaying a position of the toolbar relative to the three-point hitch on a visual display (e.g., a screen, a graphical user interface), as shown in act 306. Displaying the position of the toolbar relative to the three-point hitch may include displaying the position of the at least one contouring actuator, such as by displaying a percentage of travel of the at least one contouring actuator. The position of the at least one contouring actuator may correspond to the position of the toolbar relative to the three-point hitch. The position of the at least one contouring actuator may include the percentage of travel of the at least one contouring actuator and may correspond to sensor data from, for example, a cylinder position sensor coupled to the at least one contouring actuator. In some embodiments, displaying the position of the toolbar may include displaying sensor data from a position sensor coupled to one of the tractor and the agricultural implement and configured to measure the distance between the agricultural implement and the tractor.

The method 300 may further include determining a position of the three-point hitch that would cause the toolbar to move to a center of the range of travel of the toolbar relative to the three-point hitch while the at least one row unit is within the central portion of the range of travel of the at least one row unit, as shown in act 308. The position of the three-point hitch may be determined based on the difference between the current position of the toolbar relative to the three-point hitch and the center of travel of the toolbar. In some embodiments, displaying the position of the three-point hitch that would cause the toolbar to move to a center of the range of travel of the toolbar relative to the three-point hitch comprises displaying a direction of travel of the three-point hitch that would cause the at least one contouring actuator to move the toolbar toward the center of travel of the toolbar relative to the three-point hitch. In some embodiments, act 308 includes causing the three-point hitch to move up or down to cause the at least one contouring actuator to cause the toolbar to move toward the center of the range of travel of the toolbar. The position of the toolbar relative to the three-point hitch may be displayed responsive to moving the three-point hitch. In some embodiments, after moving the three-point hitch, the position of the three-point hitch may be locked.

In some embodiments, the method 300 further includes displaying the position of the toolbar relative to the three-point hitch while traversing an agricultural field with the agricultural implement, as shown in act 310. In some embodiments, based on the weight of the agricultural implement, the weight of commodities carried by the row units and/or the central hopper, the tire pressures, the applied downforce on each row unit, and/or other factors, the height of the tractor may fluctuate during operation. Fluctuations in the height of the tractor may cause the contouring actuators to move the toolbar relative to the three-point hitch to bring the row units within a central portion of the range of travel of the row units. In some embodiments, act 310 includes providing a display of a direction in which the three-point hitch should be moved to move the toolbar toward the center of travel of the toolbar relative to the three-point hitch.

Accordingly, the agricultural implement 140 may be configured to maintain the 170 within a central portion of the range of travel of the toolbar 170 relative to the three point hitch (using the actuators 196) based on the contour of the agricultural field. Moving the three-point hitch to cause the toolbar 170 be within the central portion of the range of travel of the toolbar 170 relative to the three-point hitch 114 may allow for the toolbar 170 to have an optimal range of motion to lift or lower the row units 180 based on the contour of the agricultural field.

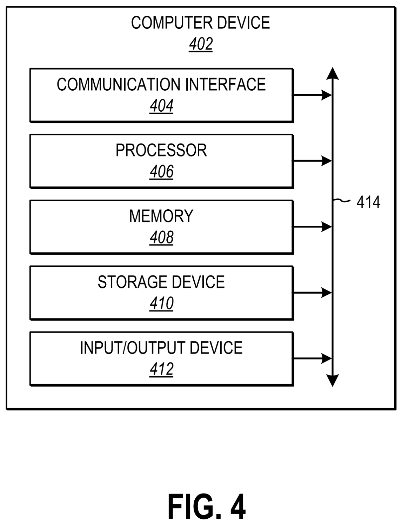

FIG. 4 is a schematic view of a computer device 402. In some embodiments, the control system 110 and/or at least one of the three-point hitch controller 125 and the agricultural implement toolbar controller 129 includes a computer device such as the computer device 402 of FIG. 4. The computer device 402 may include a communication interface 404, at least one processor 406, a memory 408, a storage device 410, an input/output device 412, and a bus 414. The computer device 402 may be used to implement various functions, operations, acts, processes, and/or methods disclosed herein, such as the method 300.

The communication interface 404 may include hardware, software, or both. The communication interface 404 may provide one or more interfaces for communication (such as, for example, packet-based communication) between the computer device 402 and one or more other computing devices or networks (e.g., a server). As an example, and not by way of limitation, the communication interface 404 may include a network interface controller (NIC) or network adapter for communicating with an Ethernet or other wire-based network or a wireless NIC (WNIC) or wireless adapter for communicating with a wireless network, such as a Wi-Fi.

The at least one processor 406 may include hardware for executing instructions, such as those making up a computer program. By way of non-limiting example, to execute instructions, the at least one processor 406 may retrieve (or fetch) the instructions from an internal register, an internal cache, the memory 408, or the storage device 410 and decode and execute them to execute instructions. In some embodiments, the at least one processor 406 includes one or more internal caches for data, instructions, or addresses. The at least one processor 406 may include one or more instruction caches, one or more data caches, and one or more translation look aside buffers (TLBs). Instructions in the instruction caches may be copies of instructions in the memory 408 or the storage device 410.

The memory 408 may be coupled to the at least one processor 406. The memory 408 may be used for storing data, metadata, and programs for execution by the processor(s). The memory 408 may include one or more of volatile and non-volatile memories, such as Random-Access Memory ("RAM"), Read-Only Memory ("ROM"), a solid state disk ("SSD"), Flash, Phase Change Memory ("PCM"), or other types of data storage. The memory 408 may be internal or distributed memory.

The storage device 410 may include storage for storing data or instructions. As an example, and not by way of limitation, storage device 410 may include a non-transitory storage medium described above. The storage device 410 may include a hard disk drive (HDD), Flash memory, an optical disc, a magneto-optical disc, magnetic tape, or a Universal Serial Bus (USB) drive or a combination of two or more of these. The storage device 410 may include removable or non-removable (or fixed) media, where appropriate. The storage device 410 may be internal or external to the storage device 410. In one or more embodiments, the storage device 410 is non-volatile, solid-state memory. In other embodiments, the storage device 410 includes read-only memory (ROM). Where appropriate, this ROM may be mask programmed ROM, programmable ROM (PROM), erasable PROM (EPROM), electrically erasable PROM (EEPROM), electrically alterable ROM (EAROM), or Flash memory or a combination of two or more of these.

The storage device 410 may include machine-executable code stored thereon. The storage device 410 may include, for example, a non-transitory computer-readable storage medium. The machine-executable code includes information describing functional elements that may be implemented by (e.g., performed by) the at least one processor 406. The at least one processor 406 is adapted to implement (e.g., perform) the functional elements described by the machine-executable code. In some embodiments the at least one processor 406 may be configured to perform the functional elements described by the machine-executable code sequentially, concurrently (e.g., on one or more different hardware platforms), or in one or more parallel process streams.

When implemented by the at least one processor 406, the machine-executable code is configured to adapt the at least one processor 406 to perform operations of embodiments disclosed herein. For example, the machine-executable code may be configured to adapt the at least one processor 406 to perform at least a portion or a totality of the method 300 of FIG. 3. As another example, the machine-executable code may be configured to adapt the at least one processor 406 to perform at least a portion or a totality of the operations discussed for the agricultural implement 140 of FIG. 1A. As a specific, non-limiting example, the machine-executable code may be configured to adapt the at least one processor 406 to cause the position of the toolbar 170 relative to the three-point hitch 114 and/or the position of the actuators 196 to be displayed; to cause the position of the three-point hitch 114 to be displayed; to determine the amount or direction in which the three-point hitch 114 should be moved to move the toolbar 170 to the center of travel thereof; and/or to cause the change in position of the three-point hitch 114 to be displayed.

The input/output device 412 may correspond to an input/output device of the control system 110 of FIG. 1A and may allow an operator of the agricultural implement 140 to provide input to, receive output from, the computer device 402. The input/output device 412 may include a mouse, a keypad or a keyboard, a joystick, a touch screen, a camera, an optical scanner, network interface, modem, other known I/O devices, or a combination of such I/O interfaces.

In some embodiments, the bus 414 (e.g., a Controller Area Network (CAN) bus, an ISOBUS (ISO 11783 Compliant Implement Control)) may include hardware, software, or both that couples components of computer device 402 to each other and to external components.

All references cited herein are incorporated herein in their entireties. If there is a conflict between definitions herein and in an incorporated reference, the definition herein shall control.

While the present disclosure has been described herein with respect to certain illustrated embodiments, those of ordinary skill in the art will recognize and appreciate that it is not so limited. Rather, many additions, deletions, and modifications to the illustrated embodiments may be made without departing from the scope of the disclosure as hereinafter claimed, including legal equivalents thereof. In addition, features from one embodiment may be combined with features of another embodiment while still being encompassed within the scope as contemplated by the inventors. Further, embodiments of the disclosure have utility with different and various machine types and configurations.

## Claims

1. A method of operating an agricultural implement coupled to a three-point hitch of a towing vehicle, the method comprising:
lowering the three-point hitch to a lowered position to contact a ground with row units of an agricultural implement coupled to the three-point hitch, the agricultural implement comprising:
a frame;
a toolbar coupled to the frame, the toolbar carrying the row units, each of the row units coupled to the toolbar with parallel linkages; and
at least one contouring actuator coupled to the frame and configured cause a plurality of the row units to lift or lower relative to the ground;
based on a position of at least one row unit relative to the toolbar or the ground and a position of the toolbar relative to the three-point hitch, displaying a position of the three-point hitch that would cause the toolbar to move toward a center of a range of travel of the toolbar relative to the three-point hitch; and
receiving an instruction to adjust the position of the three-point hitch to cause the toolbar to move toward the center of the range of travel of the toolbar while the at least one row unit is at a center of travel of the at least one row unit relative to the toolbar or the ground.

2. The method of claim 1, further comprising moving the at least one row unit to the center of travel of the at least one row unit with the at least one contouring actuator before displaying the position of the three-point hitch; optionally wherein moving the at least one row unit to the center of travel of the at least one row unit least one row unit comprises moving the parallel linkages of the at least one row unit to be substantially parallel to the ground.

3. The method of claim 2, wherein moving the at least one row unit to the center of travel of the at least one row unit least one row unit comprises moving a plurality of the row units to the center of travel of each of the row units; optionally wherein moving a plurality of the row units to the center of travel of each of the row units comprises moving each of the row units based on an average distance of the row units relative to the toolbar or the ground; and further optionally wherein moving each of the row units based on an average distance of the row units relative to the toolbar or the ground comprises reducing an average distance of the row units from the center of travel of each of the row units.

4. The method of any one of claims 2 through 3, wherein moving at least one row unit to the center of travel of the at least one row unit with the at least one contouring actuator comprising moving the at least one row unit using two contouring actuators.

5. The method of any one of claims 1 through 4, further comprising:
measuring the position of the at least one row unit relative to the toolbar or the ground with at least one sensor; and
moving the at least one row unit to the center of the range of travel of the at least one row unit based on the position of the at least one row unit.

6. The method of any one of claims 1 through 5, further comprising receiving an instruction to move the three-point hitch to cause toolbar to move to the center of the range of travel of the toolbar relative to the three-point hitch; optionally comprising displaying a change in the position of the toolbar relative to the three-point hitch responsive to moving the three-point hitch; and optionally further comprising locking the position of the three-point hitch after moving the three-point hitch.

7. The method of any one of claims 1 through 6, further comprising displaying a position of at least one row unit relative to the ground or the toolbar.

8. The method of any one of claims 1 through 7, further comprising:
traversing a field with the agricultural implement;
adjusting a downforce applied to each of the row units; and
responsive to adjusting the downforce applied to each of the row units, adjusting the position of the three-point hitch to cause the toolbar to move toward the center of the range of travel of the toolbar.

9. The method of any one of claims 1 through 8, wherein displaying a position of the three-point hitch that would cause the toolbar to move toward a center of a range of travel of the toolbar relative to the three-point hitch comprises displaying an indication of the position of the three-point hitch that would cause the toolbar to between about 30% of and about 70% of the range of travel of the toolbar.

10. The method of any one of claims 1 through 9, further comprising moving the three-point hitch to the position to cause the toolbar to move to the center of the range travel of the toolbar.

11. The method of any one of claims 1 through 9, further comprising displaying the position of the toolbar relative to the three-point hitch; optionally wherein displaying the position of the toolbar relative to the three-point hitch comprises displaying a percentage of travel of the at least one contouring actuator; and further optionally comprising determining the percentage of travel of the at least one contouring actuator with a hydraulic cylinder position sensor.

12. The method of any one of claims 1 through 11, wherein lowering the three-point hitch to a lowered position to contact a ground with row units comprises lowering the three-point hitch on a substantially level ground surface.

13. An agricultural system, comprising:
a towing vehicle comprising:
a chassis supported on a ground; and
a three-point hitch coupled to the chassis;
an agricultural implement coupled to the three-point hitch, the agricultural implement comprising:
a frame;
a toolbar coupled to the frame, the toolbar carrying row units coupled to the toolbar by parallel linkages; and
at least one contouring actuator coupled to the frame and configured to lift or lower a plurality of the row units relative to the ground; and
a control system configured to:
cause the at least one contouring actuator to move the toolbar and at least one row unit to a central portion of a range of travel of the at least one row unit;
display a position of the toolbar relative to the three-point hitch; and
display a direction of movement of the three-point hitch that would cause the at least one contouring actuator to move the toolbar to a center of a range of travel of the toolbar while the at least row unit is within the central portion of the range of travel of the at least one row unit.

14. The agricultural system of claim 13, further comprising a sensor coupled to the at least one contouring actuator configured to determine the position of the toolbar relative to the three-point hitch based on the position of the at least one contouring actuator.

15. The agricultural system of claim 13 or claim 14, further comprising a downforce actuator coupled to each row unit, the downforce actuator configured to apply a downforce to each row unit; optionally wherein the control system is configured to move the position of the three-point hitch after applying the downforce to each row unit.

16. The agricultural system of any one of claims 13 through 15, wherein the control system is configured to cause the three-point hitch to move in the direction of movement.

17. The agricultural system of any one of claims 13 through 16, further comprising at least one position sensor configured to determine a position of the at least one row unit relative to the ground or the toolbar.

18. The agricultural system of any one of claims 13 through 17, further comprising a hydraulic cylinder position sensor or a position sensor configured to determine the position of the toolbar relative to the three-point hitch.

19. A control system for an agricultural machine, the control system comprising:
at least one processor; and
at least one non-transitory computer-readable storage medium storing instructions thereon that, when executed by the at least one processor, cause the control system to:
provide a visual indication of a position of a toolbar of an agricultural implement relative to a three-point hitch of a towing vehicle, the agricultural implement coupled to the towing vehicle by the three-point hitch;
move at least one row unit coupled to a toolbar of the agricultural implement with at least one contouring actuator coupled to a central portion of a range of travel of the at least one row unit;
determine a direction of movement of the three-point hitch that would cause the toolbar to move toward a center of travel of the toolbar while the at least one row unit is within the central portion of the range of travel of the at least one row unit; and
display the direction of movement of the three-point hitch.
